# FASCICULE DE BREVET EUROPEEN

(11) **EP 3 039 274 B1**
(45) Date de publication et mention de la délivrance du brevet: **03.07.2024**
(21) Numéro de dépôt: 14767057.4
(22) Date de dépôt: 29.08.2014
(51) Int. Cl.: F02K 1/72

(54) **NACELLE À DISPOSITIF D'INVERSION DE POUSSÉE À GRILLES MOBILES MAINTENUES**
GONDEL MIT SCHUBUMKEHRVORRICHTUNG MIT GESTÜTZTEN MOBILEN GITTERN
NACELLE COMPRISING A THRUST REVERSER DEVICE WITH MAINTAINED MOBILE GRIDS

(30) Priorité: 30.08.2013 FR 1358333
(43) Date de publication de la demande: 06.07.2016
(73) Titulaire: Safran Nacelles, 76700 Gonfreville-l'Orcher (FR)
(72) Inventeur: VAUCHEL, Guy Bernard, F-76700 Harfleur (FR)
(74) Mandataire: Germain Maureau
(86) Numéro de dépôt international: PCT/FR2014/052142
(87) Numéro de publication internationale: WO 2015/028755

(56) Documents cités:
- DE-A1-102011 008 917
- DE-A1-102011 008 918
- FR-A1- 2 132 380
- FR-A1- 2 978 802

## Description

La présente invention concerne une nacelle à dispositif d'inversion de poussée à grilles mobiles maintenues.

L'invention se situe dans le domaine des inverseurs de poussée à grilles pour nacelles d'aéronef et concerne plus particulièrement l'architecture d'installation des grilles d'un inverseur de poussée à grilles.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'inversion de poussée.

Une nacelle présente généralement une structure tubulaire comprenant une entrée d'air en amont du turboréacteur, une section médiane destinée à entourer une soufflante du turboréacteur, une section aval abritant les moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pales de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, la réorientation du flux d'air est effectuée par des grilles de déviation, le capot n'ayant qu'une simple fonction de coulissage visant à découvrir ou recouvrir ces grilles. Des portes de blocage complémentaires, également appelées volets, activées par le coulissement du capotage, permettent généralement une fermeture de la veine en aval des grilles de manière à permettre la réorientation du flux froid vers les grilles.

Ces volets sont montés pivotants sur le capot coulissant entre une position rétractée dans laquelle ils assurent, avec ledit capot mobile, la continuité aérodynamique de la paroi interne de la nacelle et une position déployée dans laquelle, en situation d'inversion de poussée, ils viennent obturer au moins partiellement le canal annulaire en vue de dévier un flux de gaz vers les grilles de déviation découvertes par le coulissement du capot mobile.

Le pivotement des volets est guidé par des biellettes rattachées, d'une part, au volet, et d'autre part, à un point fixe de la structure interne délimitant le canal annulaire.

On connaît de multiples modes de réalisation de dispositifs d'inversion de poussée à grilles, notamment des modes de réalisation ayant trait à de nouvelles structures d'installation de grilles d'inversion de poussée. De telles grilles sont classiquement montées sur la nacelle de manière à ce qu'elles soient mobiles entre une position de jet direct où elles sont inactives, c'est-à-dire qu'elles ne sont pas traversées par un flux d'air à dévier, et une position d'inversion de poussée où elles sont actives, c'est-à-dire qu'elles dévient le flux d'air à dévier. La plupart du temps, ces grilles sont entraînées par le mouvement du capot mobile lorsqu'il passe de sa position escamotée à sa position déployée et inversement, mais elles peuvent aussi être entraînées par un mécanisme distinct du capot mobile. On connaît aussi des grilles traversant le cadre avant d'un dispositif d'inversion de poussée sans liaison possible avec la structure externe de capot.

Parmi ces documents, on citera :
EP2551506 publié le 28/07/2011

Des grilles sont entraînées par un système distinct du système d'entraînement du capot mobile. Le document ne fournit aucun détail de prise en compte des efforts aérodynamiques, ne fournissant aucune définition du maintien du capot externe recouvrant les grilles en jet direct et aucun moyen d'étanchéité n'est présenté.

### US2009/0151320

Des grilles partielles traversent le cadre avant. Mais une telle disposition ne permet aucune liaison avec la structure externe de capot et aucun moyen d'étanchéité n'est proposé.

### GB1 386 232

Des grilles traversent le cadre avant sans liaison possible avec la structure externe de capot et aucun moyen d'étanchéité n'est proposé.

### US3 831 376 publié le 05/02/1973

Des grilles sont entraînées par un système d'entraînement distinct de celui du capot mobile. Mais il ne décrit aucun moyen de prise en compte des efforts aérodynamiques. En effet aucun moyen de maintien du capot externe recouvrant les grilles en jet direct et aucun moyen d'étanchéité ne sont proposés.

### GB1 142 660 publié le 11/08/1966

Des grilles sont entraînées par un système d'entraînement distinct de celui du capot mobile. Aucun moyen de prise en compte des efforts aérodynamiques, sans définition du maintien du capot externe recouvrant les grilles en jet direct et sans étanchéité proposée.

### US3 829 020 publié le 13/06/1973

Des grilles traversent le cadre avant sans liaison possible avec la structure externe de capot et sans étanchéité proposée.

### FR2 978 991 publiée le 08/08/2011

Des grilles traversent le cadre avant sans liaison possible avec la structure externe de capot et sans étanchéité proposée.

Les grilles mobiles et leur mécanisme de mise en mouvement sont pour la plupart décrits seuls dans l'état de la technique, sans qu'aucune indication ni solution adaptée ne soit fournie quant à leur installation et leur intégration par rapport aux autres composants d'un dispositif d'inversion de poussée ; le cas échéant, aucune indication n'est donnée non plus quant à la constitution d'un nouvel environnement adapté à l'utilisation de telles grilles dans un dispositif d'inversion de poussée. Pour la plupart de ces dispositifs, aucune indication n'est non plus donnée quant à la définition de prise en compte de tenue sous les efforts générés par le flux d'air entrant en contact avec de telles grilles et aucune solution n'est envisagée en ce qui concerne les problématiques d'étanchéité associées à de tels dispositifs. Enfin, de tels dispositifs sont souvent complexes, peu fiables, lourds et onéreux.

Un but de la présente invention est de proposer une nacelle d'aéronef répondant à toutes ces problématiques, notamment de réaliser un maintien des grilles mobiles malgré les sollicitations, notamment aérodynamiques qu'elles subissent.

Un autre but de la présente invention est de proposer une nacelle d'aéronef simplifiée, robuste, allégée, peu onéreuse, et fiabilisée.

A cet effet, la présente invention concerne une nacelle d'aéronef, selon la revendication 1, comprenant un dispositif d'inversion de poussée, un capot externe fixe directement en amont du dispositif d'inversion de poussée, le dispositif d'inversion de poussée comporte des grilles d'inversion de poussée mobiles entre une position de jet direct et une position d'inversion de poussée entraînées par un capot mobile apte à se translater suivant l'axe de la nacelle, la nacelle étant remarquable en ce que les grilles d'inversion de poussée coopèrent avec des moyens de rigidification et d'étanchéité dudit dispositif d'inversion de poussée.

Selon d'autres caractéristiques de l'invention, le dispositif d'inversion de poussée comporte l'une ou plusieurs des caractéristiques suivantes:
- les moyens de rigidification et d'étanchéité comportent des ferrures d'appui disposées entre un cadre avant du dispositif d'inversion de poussée et un capot externe comme un capot de soufflante permettant de stabiliser les grilles et ainsi maintenir une bonne coaxialité entre le capot externe et le dispositif d'inversion de poussée ;
- chaque ferrure d'appui comporte une semelle fixée ou intégrale au cadre avant, un corps d'orientation radiale et disposé dans un jeu entre deux ensembles de grilles de déviation mobiles et un secteur externe fixé ou intégrale avec ledit capot externe, ou cadre externe d'appui du capot externe ;
- les grilles sont guidées en translation au moyen de roulettes fixées en rotation sur les ferrures d'appui de manière à rouler sur des barres longitudinales d'une semelle d'ensemble de grilles mobile, entre lesquelles chaque ferrure d'appui guide le coulissement longitudinal des ensembles de grilles de déviation mobile ;
- une rampe montante est prévue sur la surface de roulement des ensembles de grilles mobiles pour les roulettes avant qu'elles n'atteignent la position de jet inversé vers l'aval de la nacelle ;
- les moyens de rigidification et d'étanchéité comportent des moyens de fixation radiale, axiale, ou oblique, du bord aval des ensembles de grilles d'inversion de poussée mobiles au capot mobile, la fixation étant par exemple de type vis écrou ;
- les moyens de rigidification et d'étanchéité comportent un support d'étanchéité rapporté ou intégré comportant un becquet présentant une partie de solidarisation de l'extrémité aval des ensembles de grilles mobile par leur semelle, selon que la fixation des grilles sur le capot mobile (40) est radiale ou axiale, ou bien oblique ;
- le becquet coopère aussi avec une cornière d'appui de ferrures pivot qui porte l'axe de volets de blocage.

Cette solution permet d'obtenir une structure d'inversion de poussée robuste et fiable, facilement et rapidement intégrable sur les nacelles d'aéronefs ; elle permet une meilleur maîtrise des déformées de la structure.

Cette solution permet aussi d'obtenir une structure allégée permettant d'optimiser la consommation spécifique du moteur, les coûts de fonctionnement sont plus faibles, l'empreinte carbone de l'aéronef est réduite, et le coût de production est moindre du fait de la structure cohérente du capot mobile.

D'autres caractéristiques et avantages de la présente invention seront mieux compris à l'aide de la description et des figures parmi lesquelles :
- la Figure 1 représente une coupe de la nacelle au droit des grilles montrant la disposition de ferrures ;
- les Figures 2a et 2b représentent respectivement une coupe de face partielle et une vue de côté d'un ensemble de grilles mobiles et d'une ferrure dans un mode de réalisation de l'invention ;
- les Figures 3a et 3b représentent une solution à la liaison amont des grilles représentée dans une position de flux direct puis dans une position de flux inversé, cette solution n'étant pas couverte par les revendications;
- les Figures 4a et 4b représentent à la fois l'exemple des figures 3a et 3b de la liaison amont et un mode de réalisation des ferrures et des ensembles de grilles dans une position en flux direct et une position en flux inversé en perspective ;
- la Figure 5 représente une coupe partielle d'un montage permettant de maintenir en ligne les grilles en position de jet inversé ;
- les Figures 6a et 6b représentent une vue de face et une vue de côté en coupes partielles d'un autre montage permettant de maintenir en ligne les grilles en position de jet inversé ;
- les Figures 7 et 8 représentent deux modes de réalisation de la liaison aval des grilles ;
- les Figures 9 et 10 représentent deux autres modes de réalisation de la liaison aval des grilles.

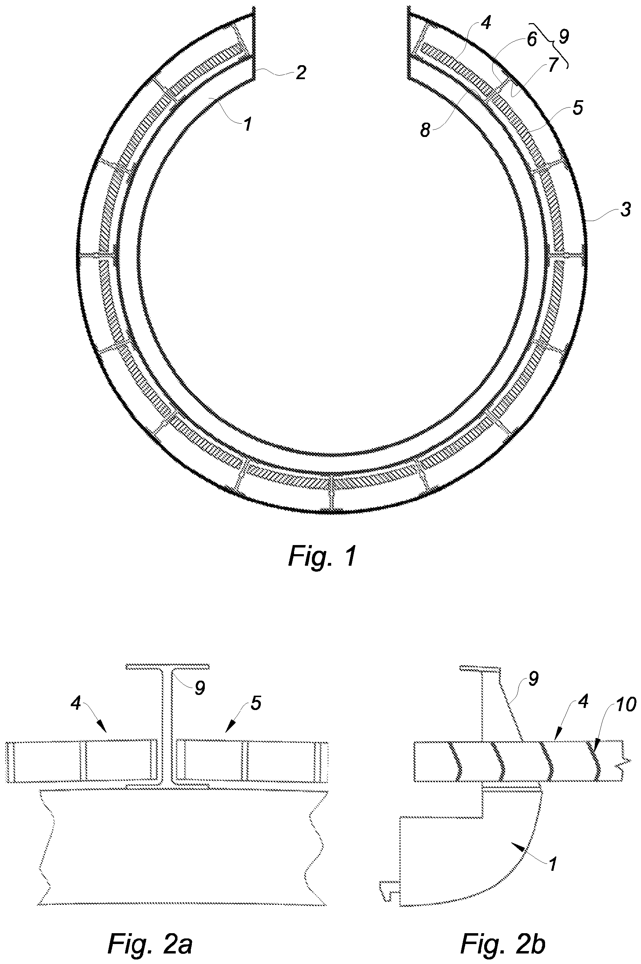

A la Figure 1, on a représenté une coupe de la nacelle au droit des grilles montrant la disposition de ferrures d'appui du capot de soufflante avec le cadre avant. La structure de l'inverseur ici représentée est donc de type O-Duct, Mais, l'invention est directement applicable à un inverseur de type C-Duct.

Dans ce mode de réalisation les grilles mobiles coopèrent avec des ferrures d'appui qui participent à des moyens de rigidification et d'étanchéité des grilles mobiles dans au moins une position de l'inverseur en jet direct et une position de l'inverseur en jet inversé.

Au moins trois ferrures sont réparties sur la circonférence de la nacelle, en périphérie du cadre avant pour assurer un minimum de tenue équilibrée d'un cadre externe d'appui du capot de soufflante. Dans l'exemple de la Figure 1, quinze ferrures sensiblement radiales sont disposées entre un cadre avant 1 et un capot de soufflante 3. Une section représentée à la partie supérieure de la Figure 1 est interrompue pour le passage du pylône de fixation de la nacelle à l'aéronef.

L'objectif de ces moyens de rigidification et d'étanchéité consistent à assurer une bonne coaxialité et tenue aux efforts de tout capot externe fixe directement en amont du dispositif d'inversion de poussée, comme un capot de soufflante 3. On a représenté dans les figures qui suivent un cadre externe d'appui.

Entre chaque ferrure, comme la ferrure 9 sont disposés radialement sur la circonférence de la nacelle des ensembles de grilles mobiles comme les ensembles 4 et 5 de part et d'autre de la ferrure 9. Les ensembles de grilles mobiles se trouvent en dehors du jet direct quand l'inverseur est inactif et sont traversés par le jet inversé, lorsque l'inverseur est actif. Dans ce cas, les grilles mobiles et le capot de soufflante ont été déplacés d'une position escamotée à une position dans laquelle la veine d'air directe, préalablement bloquée par des volets de blocage (non représentés), traverse les ensembles de grilles et, dévié par chaque grille montée et profilée dans son ensemble de grilles est renvoyée par l'extérieur de la nacelle vers la section d'entrée de la nacelle.

Chaque ferrure, comme la ferrure 9 comporte essentiellement une semelle 8 dotée de moyens de fixation au cadre avant 1, un corps central 6 s'étendant radialement et traversant l'intervalle entre deux ensembles de grilles et un secteur externe 7 doté de moyens de fixation à la face intérieure du capot de soufflante 3.

Dans un mode particulier de réalisation, la partie d'appui des ferrures porte sur un cadre externe d'appui du capot de soufflante ou sur une structure externe périphérique continue d'appui du capot de soufflante.

Un jeu est volontairement créé entre deux grilles afin de laisser un passage continu sur au moins la longueur de déplacement du capot mobile. L'homme de métier défini le nombre et la localisation nécessaires des jeux entre grilles pour permettre le passage de ferrures de renfort.

Dans un mode de réalisation, la semelle de la ferrure est fixée sur la structure principale du cadre avant. Le corps central est contenu dans la dimension du jeu entre grilles, il est dimensionné pour tenir toutes les charges vues à l'interface avec le capot de soufflante. Le secteur externe est de définition apte à s'interfacer avec une structure externe périphérique continue d'appui avec le capot de soufflante.

La ferrure est faite en un matériau choisi de manière à tenir les efforts vus par la ferrure.

Dans un mode de réalisation, le corps central de la ferrure est intégral avec la structure du cadre avant. Dans un autre mode de réalisation, le secteur d'appui du capot de soufflante fait partie intégrante de la structure du cadre avant et aussi la structure externe périphérique continue d'appui du capot de soufflante.

Aux Figures 2a et 2b, on a représenté respectivement une coupe de face partielle et une vue de côté d'un ensemble de grilles mobiles et d'une ferrure dans un mode de réalisation de l'invention.

La ferrure 9 est disposée entre deux ensembles de grilles mobiles 4 et 5, le corps de la ferrure présentant une largeur légèrement inférieure au jeu entre les deux ensembles de grilles de façon à permettre leurs déplacements relatifs. La semelle de la ferrure 9 est fixée au cadre avant 1. Dans la vue de côté de la Figure 2b, on a représenté une série de grilles incurvées comme la grille 10, qui sont montées parallèlement entre elles sur une semelle de grilles de façon à former un ensemble de grilles mobile 4.

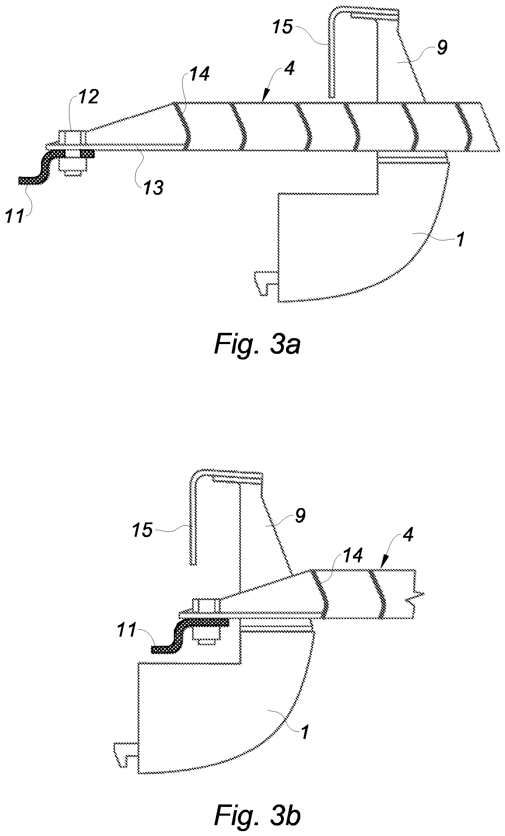

Aux Figures 3a et 3b, on a représenté une solution à la liaison amont des ensembles de grilles mobiles comme l'ensemble de grilles 4 représenté dans une position de flux inversé (Figure 3a) puis dans une position de flux direct (Figure 3b). Cette solution n'est pas couverte par les revendications.

Les ensembles de grilles mobiles sont tous reliés en amont sur un anneau 11 ou cadre structural de liaison amont des ensembles de grilles mobiles qui est monobloc en périphérie.

Le cadre structural de liaison amont des ensembles de grilles mobiles est assemblé en amont de la structure du cadre avant 1, il est monté au dessous de la semelle de grilles 13 ou au dessus selon la définition voulue ou le positionnement en hauteur par rapport au cadre avant 1 à l'aide de boulons comme 12. La forme du cadre structural 11 de liaison amont des ensembles de grilles mobiles peut varier suivant l'inertie recherchée. Dans un mode de réalisation préféré, le cadre structural 11 de liaison amont des ensembles de grilles mobiles présente un voile inférieur du profil en Z.

L'ensemble de grilles mobiles 4 est défini en longueur par rapport à la course d'inversion nécessaire aux performances d'éjection du flux et pour que le cadre amont 1 reste en avant des ferrures d'appui 9 du capot de soufflante 3 en position d'inversion.

Les efforts du flux en inversion tendent à écarter les grilles comme la grille 14 dans l'ensemble de grilles mobiles 4, vers l'externe et de créer des déformées et des contraintes sur les pièces non admissibles.

Afin de fournir une aide en tenue de déformée, c'est-à-dire de contribuer à la rigidité des ensembles de grilles mobiles, le cadre structural 11 de liaison amont des ensembles de grilles mobiles présente une inertie qui introduit une rigidité supplémentaire lors de l'application des efforts aérodynamiques par le flux inversé.

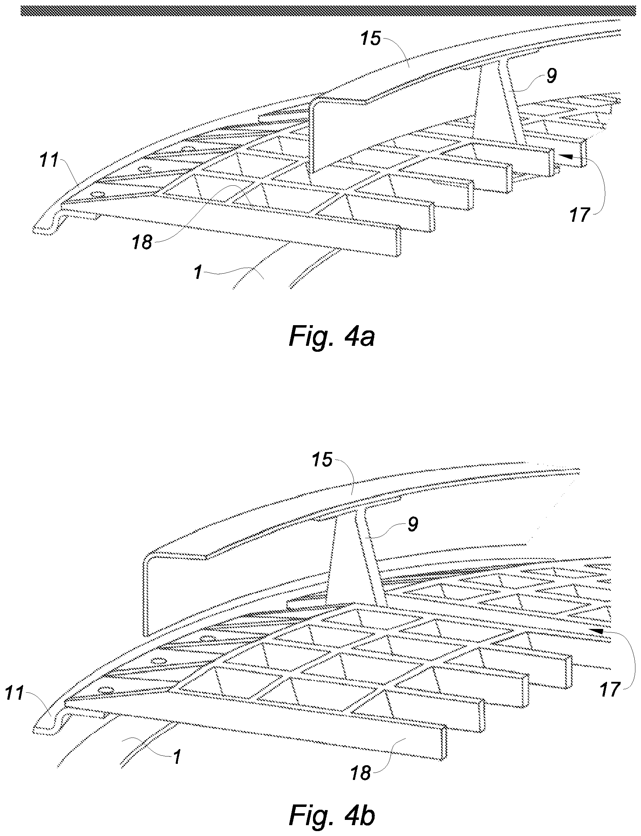

Aux Figures 4a et 4b, on a représenté des vues en perspective partielles des ensembles de grilles dotés d'un cadre structural 11 de liaison amont des ensembles de grilles mobiles selon les mêmes dispositions que celles des Figures 3a et 3b. On note plus précisément la présence d'un jeu 17 entre les deux ensembles de grilles mobiles qui sont disposés de part et d'autre du corps de la ferrure 9 d'appui du cadre d'appui 15 du capot de soufflante. Chaque ensemble de grilles mobiles est constitué par une semelle présentant une partie annulaire relativement à l'axe central de la nacelle intégré avec un treillis de barres croisées entre lesquelles sont disposées (non visible) les grilles incurvées de déviation proprement dites. On aperçoit le cadre structural 11 de liaison amont des ensembles de grilles mobiles en amont de chaque ensemble de grilles mobile. La semelle de chaque ensemble de grilles mobile comporte aussi des barres qui s'étendent parallèlement à l'axe central de la nacelle comme la barre 18 et des barres transversales (non référencées) qui permettent de former des cadres dans lesquels sont montées les grilles de déviation proprement dites. On remarque que le jeu 17 entre deux ensembles de grilles mobiles disposées de part et d'autre d'une ferrure d'appui 9 est constitué entre deux barres de semelle d'ensemble de grilles mobiles et qu'il présente une longueur mesurée le long de la direction de l'axe central de la nacelle suffisante pour permettre le déplacement de l'ensemble de grilles mobiles entre la position de jet inversé (Figure 4a) et la position de jet direct (Figure 4b).

Dans les moyens de rigidification et d'étanchéité des ensembles de grilles mobiles, selon l'invention, il est proposé de soutenir ou de maintenir l'extrémité amont des grilles au moins en position d'inversion complète, voire sur tout ou une partie de la course. Un tel arrangement est représenté par une configuration dans laquelle est utilisée une partie du cadre avant 1 comme butée. Dans cette configuration, le voile inférieur 22 du profil en Z du cadre structural 20 de liaison amont des ensembles de grilles mobiles est retourné vers l'aval et vient en contact sur une butée 22, partielle ou complète, du cadre avant 1.

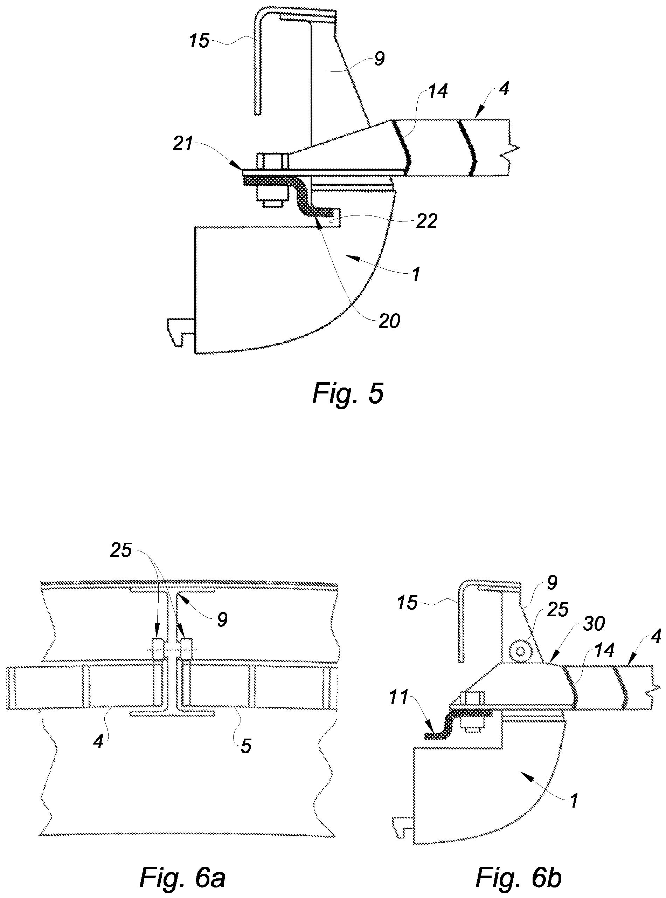

Dans les moyens de rigidification et d'étanchéité des ensembles de grilles mobiles, il est aussi proposé de soutenir l'extrémité amont des grilles sur tout ou une partie de la course des ensembles de grilles mobiles. Aux Figures 6a et 6b qui sont une vue de face et une vue de côté en coupes partielles d'un autre montage permettant de maintenir en ligne les grilles en position de jet inversé, on a ajouté des roulettes 25 de part et d'autre du corps de la ferrure d'appui 9 qui sont destinées à rouler au moins sur une partie des barres longitudinales de semelle d'un ensemble de grilles mobiles 4 et d'un ensemble de grilles mobiles 5, comme la barre 18 (Figure 4a) disposée la plus proche du jeu 17 permettant la translation de l'ensemble de grilles mobiles.

A la Figure 6b, une rampe 30 montante est prévue sur la surface de roulement des ensembles de grilles mobiles pour les roulettes 25 avant qu'elles n'atteignent la position de jet inversé vers l'aval de la nacelle qui permet de d'appuyer l'ensemble de grilles mobile 4 contre le cadre avant 1 améliorant ainsi la rigidité de l'ensemble du dispositif d'inversion de poussée en position d'inversion du jet. Selon la disposition de joints d'étanchéité, cette disposition est aussi favorable à l'amélioration de l'étanchéité du dispositif d'inversion de poussée lors de la translation des ensembles de grilles mobiles.

On remarque qu'un cadre structural 11 de liaison amont des ensembles de grilles mobiles dans la disposition décrite aux Figures 3a, 3b et 4a, 4b a été combiné avec la disposition des roulettes 25 sur la ferrure d'appui 9. Cette combinaison est meilleure que la disposition unique du cadre structural de liaison amont des ensembles de grilles mobiles, des ferrures ou des roulettes de ferrure. Mais, une seule de ces dispositions serait envisageable pour réaliser les moyens de rigidification et d'étanchéité.

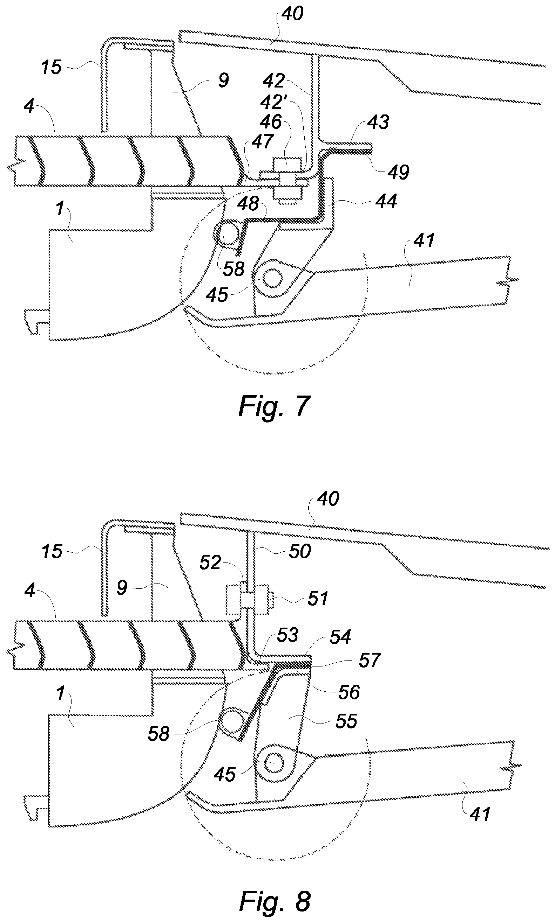

Aux Figures 7 et 8, on a représenté deux modes de réalisation de la liaison aval des grilles, ou ensembles de grilles mobiles. La liaison aval a été développée dans le but de participer à des moyens de rigidification et d'étanchéité du dispositif d'inversion de poussée de la nacelle de l'invention, de façon aussi à améliorer le maintien des grilles aux efforts aérodynamiques soumis, notamment en jet inversé.

Le dispositif d'inversion de poussée comporte ainsi qu'il est connu un capot mobile 40 dont l'intérieur du bord amont en regard des ensembles de grilles mobiles comme l'ensemble de grilles mobile 4, qui a été représenté aux Figures 7 et 8 en position de jet direct, l'air issu de la soufflante (non représentée traversant la veine principale directe et s'évacuant vers l'aval de la nacelle dans la direction de l'axe central de la nacelle.

Les moyens de rigidification et d'étanchéité comportent un support d'étanchéité rapporté ou intégré comportant un becquet 42, 50, 61 présentant une partie de solidarisation 42', 50, 63 de l'extrémité aval des ensembles de grilles mobile par leur semelle 47, 52, 60, selon que la fixation des grilles sur le capot mobile 40 est radiale ou axiale, ou bien oblique.

L'amont du capot mobile, du fait de la localisation des grilles en amont de sa structure, peut être de constitution continue radialement et renforcer significativement la structure mobile. Elle forme un becquet qui peut être intégré à la structure du capot mobile ou rapportée par fixations sur celle-ci. Elle peut être de différentes configurations de formes permettant différentes interfaces avec les grilles en fonction du besoin de l'étude.

Les efforts vus par les grilles en jet inversé sont longitudinaux et radiaux, donnant une composante oblique vers l'externe par rapport à l'axe de la nacelle.

Dans un premier mode de réalisation, un montage en axial avec la semelle de la grille placée sous le talon du becquet permet de reprendre l'effort aérodynamique dans sa direction maximale dans la direction de l'axe central de la nacelle.

Le bord circonférentiel aval 47 de la semelle de chaque ensemble de grilles mobile comme l'ensemble 4 présente une orientation axiale vers l'aval qui se raccorde avec un volet 42' parallèle d'un becquet 42 solidaire de l'intérieur du capot mobile 40 sur son extrémité amont disposée. Le bord circonférentiel aval 47 est boulonné 46 de place en place sur ce volet 42' du becquet 42. L'étanchéité 58 du dispositif d'inversion de poussée de l'invention est renforcée du côté aval par un support de joint 48 en forme de Z dont une aile 49 prend appui sur un volet axial 43 du becquet 42. Un coin du support de joint 48 est destiné à se loger sur une cornière 44 montée sur une ferrure pivot en relation avec une articulation 45 de volet de blocage 41 qui est destiné, lors du passage en jet inversé, à venir intercepter la veine d'air direct pour diriger ainsi le flux d'air issu de la soufflante à travers les ensembles de grilles mobiles comme 4, lorsque le capot mobile 40 a été translaté vers l'aval, extrayant les ensembles de grilles mobiles comme 4 vers l'aval au-delà de la ferrure 9 et du cadre avant 1.

On note que le volet de blocage 41 comporte un becquet qui, lors de la descente du volet de blocage 41, remonte en butée sous le bord aval de la semelle de l'ensemble de grilles mobile 4, assurant à la fois la rigidification et l'étanchéité de la partie aval du dispositif d'inversion de poussée.

Dans un deuxième mode de réalisation, un montage en frontal avec en option une talonnette placée sous le becquet du capot permet de même de reprendre le sens de l'effort aérodynamique.

A la Figure 8, le becquet 50 présente une partie radiale perpendiculaire à l'axe central de la nacelle sur laquelle un bord radial 52 dirigé vers l'extérieur de l'axe central de la nacelle est boulonné 51 de place en place.

Le becquet 50 présente un retour axial 54, dans la direction de l'axe central de la nacelle et dirigé vers l'aval qui reçoit une talonnette de même orientation 53 de la semelle de l'ensemble de grilles mobile 4.

Un support de joint d'étanchéité 57 est disposé sous le retour axial 54 entre lui et une cornière 56 portée par un levier 55 monté sur l'articulation 45 du volet de blocage 41.

Les deux figures suivantes montrent un montage de biais, représenté sur le becquet afin d'inclure dans la même structure de becquet le support de l'étanchéité mais qui peut être réalisé aussi par le dessous de la semelle.

Pour l'étanchéité entre la veine interne et l'externe nacelle, plusieurs solutions existent dont certaines sont représentées schématiquement dans les figures après.

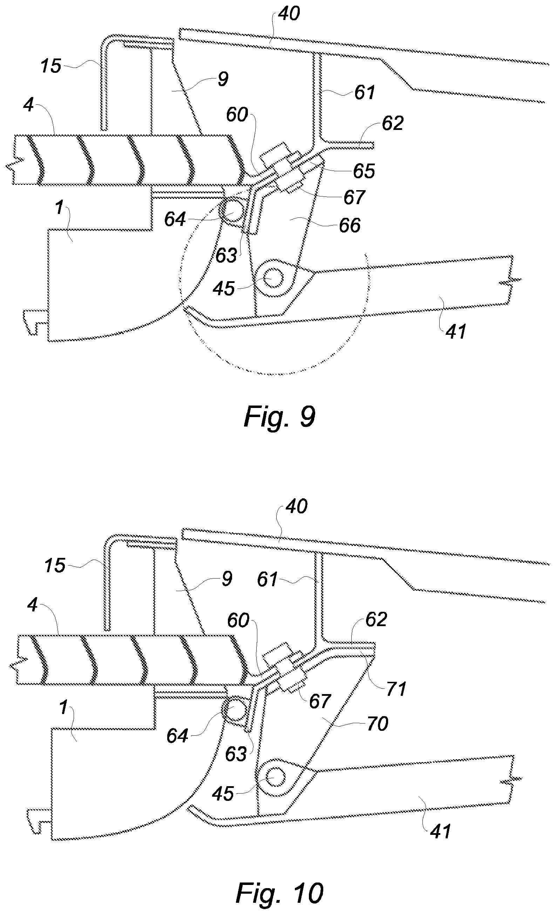

A la Figure 9, on a réalisé des moyens de rigidification et d'étanchéité qui comportent un moyen de support continu rapporté sur le becquet 61 de capot mobile 40 mais qui peuvent aussi supporter les ferrures pivots 45 des volets de blocage 41.

Le bord aval 60 de la semelle de l'ensemble de grilles 4 présente une pente oblique relativement à la direction de l'axe central de la nacelle. Le becquet 61 présente après son attache radiale (verticale au dessin) à la face intérieure du capot mobile 40, deux parties 63 présentant une première pente dirigée vers l'amont parallèle à la pente du bord aval de la semelle de l'ensemble de grilles qu'elle reçoit et une extrémité d'une pente plus prononcée vers l'axe central de la nacelle et l'amont. Le bord aval 60 est boulonné 67 sur la première pente des deux parties 63 de becquet tandis qu'un volet 62 du becquet repart parallèlement à l'axe central de la nacelle vers l'aval.

Les deux parties 63 obliques du becquet reçoivent aussi une cornière d'appui 65 qui porte la ferrure pivot 66 qui porte l'axe 45 du volet de blocage 41.

A la Figure 10, on a réalisé des moyens de rigidification et d'étanchéité qui comportent le support intégré à la structure du becquet 61 qui peut aussi supporter les ferrures pivots des volets. Le bord aval 60 de la semelle de l'ensemble de grilles mobile 4 est aussi plié en oblique pour venir se boulonner sur les deux parties inclinées 63 du becquet 61. La ferrure pivot 70 porte une cornière d'appui coudée 71 qui vient à la fois en appui sur le volet 62 d'orientation axiale et sur la première pente oblique des deux parties obliques 63 du becquet 61.

L'ensemble du bord aval de semelle, sa fixation par boulonnage au becquet 61 la forme de la cornière de la ferrure pivot de volet de blocage permettent ainsi selon les diverses géométries possibles comme celles décrites ci-dessus d'améliorer la rigidité et l'étanchéité du dispositif d'inversion de poussée de la nacelle de l'invention.

L'invention apporte une définition optimale de positionnement du joint d'étanchéité qui doit être le plus bas possible en contact sur la structure du bord de déviation du cadre avant afin d'engendrer le moins d'effort résultant d'auto ouverture du capot mobile.

L'ensemble de l'installation des grilles d'une part sur la structure amont du capot mobile et d'autre part en amont avec un cadre continu permet d'assurer une cohésion structurale forte permettant de réduire la masse globale des composants sans altérer le comportement général de l'inverseur.

## Revendications

1. Nacelle d'aéronef comprenant un dispositif d'inversion de poussée, un capot externe fixe directement en amont du dispositif d'inversion de poussée, comme un capot de soufflante (3), le dispositif d'inversion de poussée comporte des grilles d'inversion de poussée mobiles (4, 5) entre une position de jet direct et une position d'inversion de poussée entraînées par un capot mobile (40) apte à se translater suivant l'axe de la nacelle, les grilles d'inversion de poussée (4, 5) coopérant avec des moyens de rigidification et d'étanchéité (11, 20 ; 9, 25 ; 47, 60, 52 ; 42, 50, 61) dudit dispositif d'inversion de poussée, **caractérisée en ce que** les moyens de rigidification et d'étanchéité comportent un cadre amont structural de liaison amont (11, 20) des ensembles de grilles mobiles (4, 5) présentant une section sensiblement en forme de Z et une forme globalement annulaire reliant les ensembles de grilles mobiles (4, 5) entre elles par leur extrémité amont, une partie du cadre avant (1) étant utilisée comme butée, le voile inférieur (21) du profil en Z du cadre structural (20) de liaison amont des ensembles de grilles mobiles est retourné vers l'aval et vient en contact sur une butée (22), partielle ou complète, du cadre avant (1).

2. Nacelle selon la revendication 1, **caractérisée en ce que** les moyens de rigidification et d'étanchéité comportent des ferrures d'appui (9) disposées entre un cadre avant (1) du dispositif d'inversion de poussée et un capot externe comme un capot de soufflante (3) permettant de stabiliser les grilles et ainsi maintenir une bonne coaxialité entre le capot externe et le dispositif d'inversion de poussée.

3. Nacelle selon la revendication 2, **caractérisée en ce que** chaque ferrure d'appui comporte une semelle (8) fixée ou intégrale au cadre avant (1), un corps (6) d'orientation radiale et disposé dans un jeu (17) entre deux ensembles de grilles de déviation mobiles (4, 5) et un secteur externe (7) fixé ou intégrale avec ledit capot externe (3), ou cadre externe d'appui (15) du capot externe (3).

4. Nacelle selon la revendication 2, **caractérisée en ce que** les grilles (4, 5) sont guidées en translation au moyen de roulettes (25) fixées en rotation sur les ferrures d'appui (9) de manière à rouler sur des barres longitudinales (18) d'une semelle d'ensemble de grilles mobile (4), entre lesquelles (17) chaque ferrure d'appui (9) guide le coulissement longitudinal des ensembles de grilles de déviation mobile (4, 5).

5. Nacelle selon la revendication 4, **caractérisée en ce que** une rampe (30) montante est prévue sur la surface de roulement des ensembles de grilles mobiles pour les roulettes (25) avant qu'elles n'atteignent la position de jet inversé vers l'aval de la nacelle.

6. Nacelle selon la revendication 1, **caractérisée en ce que** les moyens de rigidification et d'étanchéité comportent des moyens de fixation radiale, axiale, ou oblique, du bord aval des ensembles de grilles d'inversion de poussée mobiles au capot mobile (40), la fixation étant par exemple de type vis écrou.

7. Nacelle selon la revendication 6, **caractérisée en ce que** les moyens de rigidification et d'étanchéité comportent un support d'étanchéité rapporté ou intégré comportant un becquet (42, 50, 61) présentant une partie de solidarisation (42', 50, 63) de l'extrémité aval des ensembles de grilles mobile par leur semelle (47, 52, 60), selon que la fixation des grilles sur le capot mobile (40) est radiale ou axiale, ou bien oblique.

8. Nacelle selon la revendication 7, **caractérisée en ce que** le becquet (42, 50, 61) coopère aussi avec une cornière d'appui (44, 56, 65, 71) de ferrures pivot (66) qui porte l'axe (45) de volets de blocage (41).

## Patentansprüche

1. Gondel eines Luftfahrzeugs, umfassend eine Schubumkehrvorrichtung, eine feste Außenabdeckung direkt stromaufwärts der Schubumkehrvorrichtung, wie eine Gebläseabdeckung (3), wobei die Schubumkehrvorrichtung zwischen einer Direktstrahlposition und einer Schubumkehrposition bewegliche Schubumkehrgitter (4, 5) beinhaltet, die durch eine bewegliche Abdeckung (40) angetrieben werden, die imstande ist, sich entlang der Achse der Gondel zu verschieben, wobei die Schubumkehrgitter (4, 5) mit Versteifungs- und Abdichtungsmitteln (11, 20; 9, 25; 47, 60, 52; 42, 50, 61) der Schubumkehrvorrichtung zusammenwirken, **dadurch gekennzeichnet, dass** die Versteifungs- und Abdichtungsmittel einen stromaufwärts liegenden Konstruktionsrahmen zur Aufwärtsverbindung (11, 20) der beweglichen Gitterbaugruppen (4, 5) beinhalten, der einen Querschnitt im Wesentlichen in Form eines Z und eine im Allgemeinen ringförmige Form aufweist, der die beweglichen Gitterbaugruppen (4, 5) an ihrem stromaufwärts liegenden Ende miteinander verbindet, wobei ein Teil des vorderen Rahmens (1) als Anschlag verwendet wird, wobei die untere Verwindung (21) des Z-Profils des Konstruktionsrahmens (20) zur Aufwärtsverbindung der beweglichen Gitterbaugruppen nach stromabwärts umgekehrt ist, und auf einem Teil- oder Vollanschlag (22) in Kontakt mit dem vorderen Rahmen (1) gelangt.

2. Gondel nach Anspruch 1, **dadurch gekennzeichnet, dass** die Versteifungs- und Abdichtungsmittel Anlegebeschläge (9) beinhalten, die zwischen einem vorderen Rahmen (1) der Schubumkehrvorrichtung und einer Außenabdeckung, wie einer Gebläseabdeckung (3) angeordnet sind, die es ermöglicht, die Gitter zu stabilisieren, und somit eine gute Koaxialität zwischen der Außenabdeckung und der Schubumkehrvorrichtung beizubehalten.

3. Gondel nach Anspruch 2, **dadurch gekennzeichnet, dass** jeder Anlegebeschlag eine Sohle (8), die an dem vorderen Rahmen (1) befestigt, oder einstückig damit ist, einen Körper (6) mit radialer Ausrichtung und in einem Spiel (17) zwischen zwei beweglichen Gitterbaugruppen (4, 5) angeordnet, und einen Außensektor (7) beinhaltet, der an der Außenabdeckung (3) oder einem äußeren Anlegerahmen (15) der Außenabdeckung (3) befestigt, oder einstückig damit ist.

4. Gondel nach Anspruch 2, **dadurch gekennzeichnet, dass** die Gitter (4, 5) anhand von Rollen (25) vorschubgeführt sind, die an den Anlegebeschlägen (9) drehbefestigt sind, um auf Längsleisten (18) einer Sohle einer beweglichen Gitterbaugruppe (4) zu rollen, zwischen denen (17)jeder Anlegebeschlag (9) das Gleiten der beweglichen Gitterbaugruppen (4, 5) in Längsrichtung führt.

5. Gondel nach Anspruch 4, **dadurch gekennzeichnet, dass** eine ansteigende Rampe (30) an der Rolloberfläche der beweglichen Gitterbaugruppen für die Rollen (25) vorgesehen ist, bevor sie die Umkehrstrahlposition in Stromabwärtsrichtung der Gondel erreichen.

6. Gondel nach Anspruch 1, **dadurch gekennzeichnet, dass** die Versteifungs- und Abdichtungsmittel Mittel zur radialen, axialen, oder schrägen Befestigung des stromabwärts gelegenen Randes der beweglichen Schubumkehrgitterbaugruppen an der beweglichen Abdeckung (40) beinhalten, wobei die Befestigung beispielsweise in der Art von Schraube und Mutter ist.

7. Gondel nach Anspruch 6, **dadurch gekennzeichnet, dass** die Versteifungs- und Abdichtungsmittel einen beigebrachten oder integrierten Dichtungshalter beinhalten, der einen Schnabel (42, 50, 61) beinhaltet, der einen Teil zur festen Verbindung (42', 50, 63) des stromabwärts gelegenen Endes der beweglichen Gitterbaugruppen durch ihre Sohle (47, 52, 60) aufweist, je nachdem ob die Befestigung der Gitter an der beweglichen Abdeckung (40) radial, axial, oder aber schräg ist.

8. Gondel nach Anspruch 7, **dadurch gekennzeichnet, dass** der Schnabel (42, 50, 61) auch mit einem Anlegewinkeleisen (44, 56, 65, 71) von Drehbeschlägen (66) zusammenwirkt, welches die Achse (45) von Sperrklappen (41) trägt.

## Claims

1. An aircraft nacelle comprising a thrust reverser device, an outer fixed cowl directly upstream of the thrust reverser device, such as a fan cowl (3), the thrust reverser device includes movable thrust reverser cascades (4, 5) between a direct jet position and a thrust reversal position driven by a movable cowl (40) able to be translated along the axis of the nacelle, the thrust reverser cascades (4, 5) cooperating with stiffening and sealing members (11, 20; 9, 25; 47, 60, 52; 42, 50, 61) of said thrust reverser device, **characterized in that** the stiffening and sealing members include a structural upstream frame for the upstream connection (11, 20) of the sets of movable cascades (4, 5) having a substantially Z-shaped cross-section and a generally annular shape connecting the sets of movable cascades (4, 5) to each other by upstream ends thereof, a portion of a front frame (1) being used as a stop, the lower web (21) of the Z-profile of the structural frame (20) for the upstream connection of the sets of movable cascade is turned downstream and comes into contact on a partial or complete stop (22) of the front frame (1).

2. The nacelle according to claim 1, wherein the stiffening and sealing members include bearing fittings (9) disposed between a front frame (1) of the thrust reverser device and an outer cowl such as a fan cowl (3) allowing to stabilize the cascades and thus to maintain a good coaxiality between the outer cowl and the thrust reverser device.

3. The nacelle according to claim 2, **characterized in that** each bearing fitting includes a soleplate (8) fastened or integral with the front frame (1), a radially oriented body (6) disposed in a clearance space (17) between two sets of movable thrust reverser cascades (4, 5), and an outer sector (7) fastened or integral with said outer cowl (3), or bearing outer frame (15) of the outer cowl (3).

4. The nacelle according to claim 2, wherein the cascades (4, 5) are guided in translation by rollers (25) rotatably fastened on the bearing fittings (9) so as to roll on longitudinal bars (18) of a soleplate of a set of movable cascades (4), between which (17) each bearing fitting (9) guides the longitudinal sliding of the sets of movable thrust reverser cascades (4, 5).

5. The nacelle according to claim 4, **characterized in that** a rising ramp (30) is provided on the rolling surface of the sets of movable cascades for the rollers (25) before the rollers reach the reverse jet position downstream the nacelle.

6. The nacelle according to claim 1, **characterized in that** the stiffening and sealing members include radial, axial or oblique fastening members of a downstream edge of the sets of movable thrust reverser cascades to the movable cowl (40), the fastening being for example of a screw-nut type.

7. The nacelle according to claim 6, wherein the stiffening and sealing members include an attached or integrated sealing support including a spoiler (42, 50, 61) having a securing portion (42', 50, 63) of the downstream end of the sets of movable cascades by their soleplate (47, 52, 60), depending on whether the fastening of the cascades on the movable cowl (40) is radial or axial, or oblique.

8. The nacelle according to claim 7, **characterized in that** the spoiler (42, 50, 61) cooperates with a supporting bracket (44, 56, 65, 71) of pivot fittings (66) which carries the axis (45) of blocking flaps (41).
